# EUROPÄISCHE PATENTSCHRIFT

(11) **EP 3 592 701 B1**
(45) Veröffentlichungstag und Bekanntmachung des Hinweises auf die Patenterteilung: **25.11.2020**
(21) Anmeldenummer: 18707886.0
(22) Anmeldetag: 22.02.2018
(51) Int. Cl.: C01B 33/18

(54) **VERFAHREN ZUR HERSTELLUNG VON PYROGENER KIESELSÄURE**
METHOD FOR PRODUCING PYROGENIC SILICA
PROCÉDÉ DE FABRICATION DE SILICE PYROGÈNE

(30) Priorität: 10.03.2017 DE 102017203998
(43) Veröffentlichungstag der Anmeldung: 15.01.2020
(73) Patentinhaber: Wacker Chemie AG, 81737 München (DE)
(72) Erfinder: SALAMON, Marcel, 84533 Marktl (DE)
(74) Vertreter: Fritz, Helmut
(86) Internationale Anmeldenummer: PCT/EP2018/054393
(87) Internationale Veröffentlichungsnummer: WO 2018/162246

(56) Entgegenhaltungen:
- WO-A1-2015/003871
- DE-C- 974 793
- US-A- 4 292 290

## Beschreibung

Gegenstand der Erfindung ist ein Verfahren zur Herstellung von pyrogener Kieselsäure, in dem ein Stoffstrom a, enthaltend mindestens ein Brenngas, mit einem Stoffstrom b, enthaltend mindestens ein Silan ausgewählt aus der Gruppe bestehend aus Dichlorsilan (H₂SiCl₂), Monochlorsilan (H₃SiCl) oder Monosilan (SiH₄) oder deren Gemische, zu einem Stoffstrom c zusammengeführt wird, ohne dass ein statisches oder dynamisches Mischelement verwendet wird, und in dem Stoffstrom c einem Stoffstrom d, enthaltend mindestens eine Sauerstoffquelle, zugeführt wird, die Stoffströme c und d mit einem Mischelement zu einem Stoffstrom e gemischt werden, Stoffstrom e in eine Reaktionskammer eingebracht, dort gezündet und umgesetzt wird und der entstandene Feststoff abgetrennt wird.

Pyrogene Kieselsäuren werden aus gasförmigen oxidierbaren und/oder hydrolysierbaren Siliciumverbindungen, in der Regel aus Silanen bzw. Silangemischen, gewonnen, welche verdampft und vor dem Eintritt in eine Brennerdüse üblicherweise mit einer Sauerstoffquelle und einem Brenngas vermischt werden. Bei dieser Vermischung darf jedoch die Taupunkttemperatur der Siliciumverbindungen nicht unterschritten werden, da sonst eine Tröpfchen- bzw. Nebelbildung durch die Kondensation der Siliciumverbindungen eintritt. Diese Tröpfchenbildung führt zu Flammeninstabilitäten bis hin zum Ausfall der Verbrennung. Sofern eine Herstellung von pyrogenen Kieselsäuren möglich ist, kommt es zu erheblichen Qualitätseinbußen. Aus diesem Grund müssen alle Edukte einschließlich der Sauerstoffquelle so weit vorgeheizt werden, dass die Temperatur des Gasgemisches, enthaltend die Siliciumverbindungen, durchgehend oberhalb der Taupunkttemperatur liegt, so dass keine Kondensation der Siliciumverbindungen erfolgen kann.

Liegt jedoch die Zündtemperatur der Siliciumverbindungen bei Zusammentreffen mit einer Sauerstoffquelle unterhalb der Temperatur der Sauerstoffquelle und/oder der Temperatur der Siliciumverbindung, zündet das Gemisch vor dem Eintritt in die Reaktionskammer. Eine Verarbeitung von Siliciumverbindungen wie Silanen bzw. Silangemischen mit sehr niedrigen Zündtemperaturen ist daher bisher nicht möglich.
Sehr niedrige Zündtemperaturen im Sinne dieser Erfindung liegen vor, wenn die Zündtemperatur der Siliciumverbindung im unmittelbaren Bereich der Taupunkttemperatur der Siliciumverbindung (das heißt bis 5 Kelvin darüber) oder unterhalb der Taupunkttemperatur der Siliciumverbindung liegt.

Sehr niedrige Zündtemperaturen treten auch während der Einfahrvorgänge (wie z.B. beim Reaktorstart) durch die Fraktionierung der Gasphase im Verdampfer der Siliciumverbindungen oder in der Zuführung der Siliciumverbindungen zum Brenner auf, wenn ein Feedmix mit entsprechenden Anteilen von Siliciumverbindungen mit sehr niedrigen Zündtemperaturen wie beispielsweise Dichlorsilan (H₂SiCl₂) eingefahren wird.

Fahrweisen mit Sauerstoffgehalten höher als in der Luft oder mit Wasserdampfeinspeisungen wirken sich zusätzlich destabilisierend aus, wenn bereits niedrige Zündtemperature vorliegen. Eine stabile Kieselsäureproduktion ist unter diesen Bedingungen nicht möglich.

EP 2 433 905 beschreibt beispielsweise ein Verfahren zur Herstellung von pyrogenem Siliciumdioxidpulver, bei dem eine Siliciumverbindung verdampft und einer Mischkammer zugeführt wird. Vorgeheiztes Brenngas und vorgeheizte Primärluft werden der Mischkammer gesondert zugeführt. Das Gemisch wird anschließend in einem Brenner gezündet.

Dieses Verfahren setzt voraus, dass die Temperatur in der Mischkammer, in die die Siliciumverbindung, die Sauerstoffquelle und das Brenngas eingeleitet werden, unterhalb der Zündtemperatur der Siliciumverbindung liegt, da es sonst zu einer Selbstzündung der Siliciumverbindung in der Mischkammer kommen würde. Siliciumverbindungen oder Gemische aus Siliciumverbindungen mit sehr niedrigen Zündtemperaturen können nicht eingesetzt werden, da bei den dabei maximal möglichen Temperaturen unterhalb der Zündtemperatur in der Mischkammer die bereits beschriebene Tröpfchen- oder Nebelbildung eintritt.

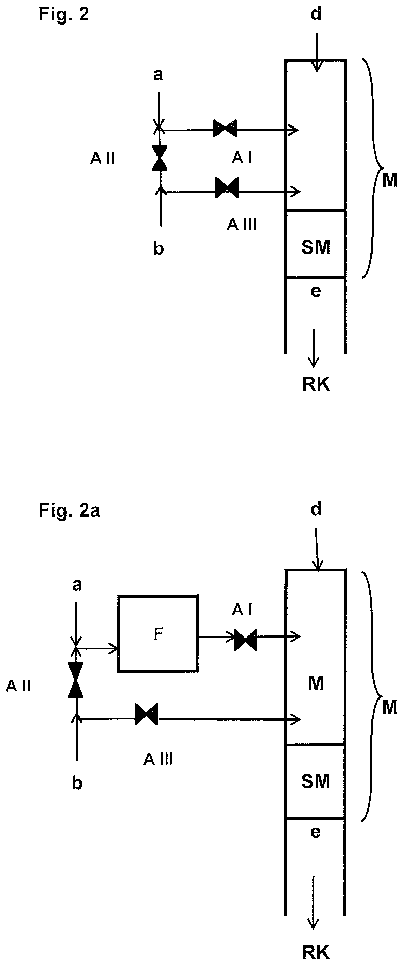

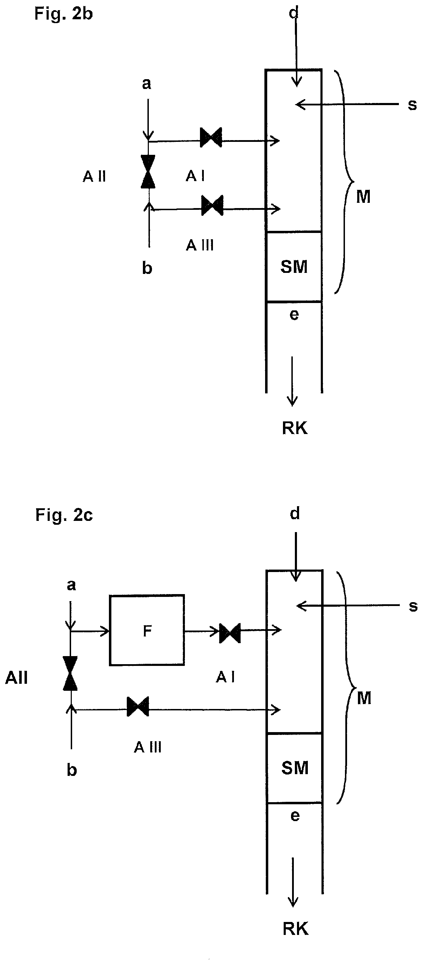

Sowohl WO 2015/003871, als auch WO 2015/003873 beschreiben ein Verfahren zur Herstellung von Kieselsäure, in dem ein Stoffstrom I enthaltend eine Siliciumverbindung mit einem Stoffstrom II enthaltend Sauerstoff mit Hilfe mindestens eines Mischelements gemischt werden. Nach Zuführung des Brenngas-enthaltenden Stoffstroms wird die Mischung jeweils in eine Reaktionskammer eingebracht, dort gezündet und umgesetzt.
Auch dieses Verfahren setzt voraus, dass die Temperatur bei der Mischung der Siliciumverbindung mit der Sauerstoffquelle unterhalb der Zündtemperatur der Siliciumverbindung liegt, da es sonst zu einer Selbstzündung der Siliciumverbindung beim Kontakt mit der Sauerstoffquelle kommen würde. Siliciumverbindungen mit sehr niedrigen Zündtemperaturen können wiederum nicht eingesetzt werden, da bei den dabei maximal möglichen Temperaturen in der Mischkammer die bereits beschriebene Tröpfchen- oder Nebelbildung eintritt.
In möglichen Ausführungsformen des Verfahrens zeigt WO 2015/003871 (Fig. 2A und 2B), dass Wasserstoff und SiCl₄ in einem statischen Mischer vorgemischt und anschließend mit Luft in einem weiteren statischen Mischer in Kontakt gebracht werden. Diese beschriebene Konfiguration hat entscheidende Nachteile. Einerseits führt die mehrstufige Mischerkonfiguration zur Bildung von Belägen in Form von extrem entzündlichen oder pyrophoren Feststoffen, da durch statische Mischelemente eine große Oberfläche gebildet wird, die neben Bereichen mit laminarer oder verwirbelter Strömung auch durch An- oder Abstromflächen bedingte Toträume mit höheren Produktablagerungen enthält. Andererseits werden diese Beläge durch die Verwirbelung im Mischelement leichter von der Wand gelöst und mitgerissen und verursachen ungewünschte Zündungen vor dem Eintritt in die Reaktionskammer. Maßnahmen zur Reduzierung oder Beherrschung dieser Beläge sind nicht beschrieben.

Es stellte sich daher die Aufgabe, die Nachteile des Stands der Technik zu überwinden und ein wirtschaftliches Verfahren zur Herstellung pyrogener Kieselsäuren zu entwickeln, in dem Siliciumverbindungen mit niedrigen Zündtemperaturen als Ausgangsstoff eingesetzt werden können, ohne dass es zu einer Zündung in der Mischkammer des Brenners vor dem Eintritt in die Brennerdüse kommt. Zudem sollte die beschriebene Problematik der sich bildenden extrem entzündlichen oder pyrophoren Beläge minimiert werden.

Gelöst wird diese Aufgabe durch die Erfindung, die ein Verfahren zur Verfügung stellt, bei dem die Siliciumverbindungen zunächst mit Brenngas zusammengeführt werden, bevor diese in eine Sauerstoffquelle eingeleitet werden, wobei in diesem Schritt auf ein statisches oder dynamisches Mischelement verzichtet wird.

Gegenstand der Erfindung ist ein Verfahren zur Herstellung von pyrogener Kieselsäure, in dem ein Stoffstrom a, enthaltend mindestens ein Brenngas, mit einem Stoffstrom b, enthaltend mindestens ein Silan ausgewählt aus der Gruppe bestehend aus Dichlorsilan (H₂SiCl₂), Monochlorsilan (H₃SiCl) oder Monosilan (SiH₄) oder deren Gemische, zu einem Stoffstrom c zusammengeführt wird, ohne dass ein statisches oder dynamisches Mischelement verwendet wird, und in dem Stoffstrom c einem Stoffstrom d, enthaltend mindestens eine Sauerstoffquelle, zugeführt wird, die Stoffströme c und d mit einem Mischelement zu einem Stoffstrom e gemischt werden, Stoffstrom e in eine Reaktionskammer eingebracht, dort gezündet und umgesetzt wird und der entstandene Feststoff abgetrennt wird.

Pyrogene Kieselsäure im Sinne der Erfindung meint Siliciumdioxid, d.h. Sauerstoffsäuren des Siliciums, und ist ein in einem Flammverfahren synthetisch hergestelltes, kolloides Material mit definierten Eigenschaften und Teilchengröße. Es besteht vollständig aus amorphen Siliciumdioxid-Partikeln (SiO₂), die zu größeren Einheiten aggregieren und agglomerieren.

Stoffstrom a enthält mindestens ein Brenngas. Als Brenngas werden bevorzugt Wasserstoff, Erdgas, Methan, Ethan, Propan oder Gemische davon eingesetzt. Bevorzugt handelt es sich beim Brenngas um Erdgas, Wasserstoff oder ein Gemisch aus Erdgas und Wasserstoff, besonders bevorzugt handelt es sich beim Brenngas um Wasserstoff. Erdgas ist ein natürlich entstandenes Gasgemisch, das hauptsächlich aus Methan besteht.

Stoffstrom b enthält mindestens ein Silan ausgewählt aus der Gruppe bestehend aus Dichlorsilan (H₂SiCl₂), Monochlorsilan (H₃SiCl) oder Monosilan (SiH₄) oder deren Gemische. Zusätzlich zu mindestens einem der genannten Silane enthält Stoffstrom b bevorzugt eine weitere Siliciumverbindung ausgewählt aus der Gruppe bestehend aus Tetrachlorsilan (SiCl₄), Trichlorsilan (HSiCl₃), Trichlormethylsilan (CH₃SiCl₃) oder Dichlormethylsilan (CH₄Cl₂Si) oder deren Gemische.
Als Siliciumverbindung werden bevorzugt Chlorid-, Nitrat-, Sulfat-, Carbonat-, Carboxylat-, Carbonyl-, Acetylacetonat-, alkoholische Verbindungen oder Gemische davon eingesetzt, besonders bevorzugt werden Chlorsilane eingesetzt.

Die Bezeichnung Silan steht für eine Stoffgruppe chemischer Verbindungen, die aus einem Silicium-Grundgerüst und Wasserstoff bestehen. Im Silan können in geringen Mengen weitere Bestandteile wie z.B. andere Siliciumverbindungen oder Kohlenwasserstoffe oder sonstige Stoffe, die bei der Herstellung von Silanen entstehen, oder herstellungsbedingt enthalten sind oder Spurenelemente enthalten sein.
Während sich Dichlorsilan (H₂SiCl₂), Monochlorsilan (H₃SiCl) oder Monosilan (SiH₄) oder deren Gemische durch geringe Zündtemperaturen auszeichnen, ist Siliciumtetrachlorid (SiCl₄) ein Beispiel für ein unbrennbares Silan. Relativ hohe Zündtemperaturen in der Gasphase weisen Silane wie z.B. Methyltrichlorsilan (CH₃SiCl₃) und Trichlorsilan (HSiCl₃) auf.

Erfindungsgemäß werden Stoffstrom a und Stoffstrom b zu einem Stoffstrom c zusammengeführt, ohne dass ein statisches oder dynamisches Mischelement verwendet wird. Das Zusammenführen der Stoffströme a und b erfolgt bevorzugt in einem Rohr. Es ist besonders bevorzugt, dass die Länge dieses Rohrs maximal 0,5 m, insbesondere bevorzugt maximal 0,3 m beträgt und in einen Filter mündet, so dass das Zusammenführen der Stoffströme a und b unmittelbar vor einem Filter erfolgt.
Es ist dabei nicht wesentlich, ob Stoffstrom b mit Stoffstrom a zusammengeführt wird oder umgekehrt.

Vor dem Zusammenführen muss Stoffstrom a auf eine Temperatur oberhalb der Taupunkttemperatur von Stoffstrom b temperiert werden, um eine Tröpfchenbildung durch die Kondensation des Silans aus Stoffstrom b zu verhindern (Details und Problematik s.u.). Bei diesem Schritt muss die Zündtemperatur jedoch nicht berücksichtigt werden, da zur Selbstzündung die Sauerstoffquelle fehlt.

Überraschenderweise wurde festgestellt, dass die Zündtemperatur des Stoffstroms c im Vergleich zur Zündtemperatur des Stoffstroms b erhöht ist. Die Zündtemperatur des Stoffstroms c liegt erfindungsgemäß bevorzugt mindestens 5 Kelvin, besonders bevorzugt mindestens 10 Kelvin über der Taupunkttemperatur von Stoffstrom b.
Diese Erhöhung der Zündtemperatur hat den wesentlichen Vorteil, dass sowohl Stoffstrom c als auch Stoffstrom d sicher über die Taupunkttemperatur von Stoffstrom b temperiert werden können, ohne dass eine Zündung bei nachfolgendem Kontakt mit Stoffstrom d eintritt. Daher ist ein stabiler Produktionsstart und eine stabile Produktion pyrogener Kieselsäure möglich. Somit liegt ein großer Vorteil des erfindungsgemäßen Verfahrens darin, dass in Stoffstrom b Dichlorsilan, Monochlorsilan, Monosilan oder deren Gemische eingesetzt werden können.

Die Zündtemperatur (auch Zündpunkt, Selbstentzündungstemperatur, Entzündungstemperatur oder Entzündungspunkt) ist diejenige Temperatur, auf die man einen Stoff oder eine Kontaktoberfläche erhitzen muss, damit sich eine brennbare Substanz (Feststoff, Flüssigkeit, deren Dämpfe oder Gas) in Gegenwart einer Sauerstoffquelle wie Luft ausschließlich aufgrund seiner Temperatur - also ohne Zündquelle wie einen Zündfunken - selbst entzündet. Im Rahmen dieser Erfindung ist mit der Zündtemperatur immer die Zündtemperatur des gasförmigen Stoffes gemeint.

Aus DE 2048 220 ist bekannt, dass sowohl Brenngas-enthaltende Stoffströme, als auch Siliciumverbindung(en)-enthaltende Stoffströme mit einer Sauerstoffquelle störende, aber nur leicht reaktive Beläge bilden, d.h. die Beläge sind nicht pyrophor oder extrem entzündlich, der Produktionsprozess ist weiterhin möglich. Ebenso ist bekannt, dass auch reine Silane/Silangemische solche Beläge bilden.
Überraschenderweise wurde nun gefunden, dass es beim Einsatz des erfindungsgemäßen Stoffstroms b und der erforderlichen Vermischung des erfindungsgemäßen Stoffstroms a mit diesem ohne Vorhandensein einer Sauerstoffquelle zur Bildung von pyrophoren oder extrem entzündlichen Feststoffen kommt. Diese Feststoffe lagern sich als Beläge z.B. dann umso stärker ab, je höher die Oberfläche ist und/oder wenn es Bereiche mit geringerer Strömungsgeschwindigkeit gibt, wie es in den üblicherweise zur Vermischung von Gasströmen genutzten Mischelementen der Fall ist. Bei den Belägen spricht man auch von FeststoffAblagerungen reaktiver Verbindungen. Der Begriff reaktiv bezieht sich darauf, dass die Feststoffbeläge pyrophor oder extrem entzündlich sind.
Die Bildung der extrem entzündlichen oder pyrophoren Feststoffe kann u.a. bereits durch geringste herstellungsbedingte Verunreinigungen des Silanfeeds (z.B. mit Borchlorid) erfolgen. Verunreinigter Wasserstoff kann ebenfalls reaktive Stoffe enthalten, welche die Bildung derartiger Beläge fördern. Zu den reaktiven Verbindungen oder reaktiven Feststoffen, die diese Beläge bilden, zählen daher insbesondere Verbindungen aus den Elementen Bor oder Silicium mit Wasserstoff oder Bor und Silicium mit Wasserstoff. Vermutet wird, dass es sich um Borate oder Borane handelt.

Ein Feed (abgeleitet von "to feed" = füttern) bezeichnet die eingesetzten Ausgangsstoffe. So bezeichnet der Silanfeed die zugeführte Silanausgangssubstanz.

Extrem entzündlich im Sinne dieser Erfindung sind mit einer Sauerstoffquelle in Kontakt gebrachte Feststoffe, welche bereits bei geringen mechanischen Belastungen, wie sie beispielsweise durch die bloße Umlenkung in Mischelementen entstehen, oder welche bereits bei Temperaturen unterhalb 100°C zünden können.

Als pyrophor werden chemische Stoffe bezeichnet, die schon bei niedriger Temperatur wie beispielsweise Raumtemperatur und an der Luft heftig mit Sauerstoff reagieren. Die bei dieser Oxidation freiwerdende Energie ist so hoch, dass die Stoffe glühen oder sogar Feuererscheinung zeigen.

Eine Zündung der extrem entzündlichen oder pyrophoren Feststoffe erfolgt bei Kontakt mit einer Sauerstoffquelle. Bereits der Eintrag kleinster Mengen der gebildeten Beläge in die Mischkammer reicht beispielsweise aus und kann zu plötzlichen Zündungen in der Mischkammer während des Betriebes führen, wobei sehr geringe Zündenergien für die Zündung der gesamten Mischung ausreichend sind. Die aus den Belägen stammenden Feststoffe stellen bereits in geringsten Mengen eine für die Zündung ausreichende Zündenergie bereit.

Das Vorhandensein eines statischen oder dynamischen Mischelements begünstigt sowohl die Bildung von extrem entzündlichen oder pyrophoren Belägen, als auch deren Verschleppung zum Sauerstoffstrom und dadurch eine unkontrollierte Zündung vor oder in der Mischkammer und/oder im Mischelement. Die Mischkammer enthält eine Mischerkonfiguration mit mindestens einem statischen oder dynamischen Mischelement, wobei Stoffstrom c und Stoffstrom d in der Kammer vor dem Mischelement zusammengeführt werden. Die Mischkammer mündet dann direkt in die den Brenner enthaltende Reaktionskammer. Der Begriff Reaktionskammer ist gleichzusetzen mit Reaktor oder Reaktorkammer. Daher bedeutet eine unkontrollierte Zündung vor oder in der Mischkammer gleichzeitig eine unkontrollierte Zündung vor Eintritt in den Reaktor.
Das Gemisch aus c und d wird bestimmungsgemäß durch Auslösen der Zündung, beispielsweise durch einen Zündfunken, im Brenner des Reaktors gezündet.

Wie im Artikel von Pahl und Muschelknautz (1979) detailliert beschrieben, bezeichnet der Begriff statisches Mischelement Apparate mit feststehenden Einbauten, die sich dadurch auszeichnen, dass strömungsbeeinflussende Elemente in einem Rohr den Stoffstrom abwechselnd teilen und zusammenführen und dadurch die Vermischung bewirken. Diese werden z.B. zum Mischen von gasförmigen Stoffströmen eingesetzt.
Zu den Mischelementen zählen neben statischen auch dynamische Mischelemente, die sich durch bewegliche (z.B. rotierende) Einbauten auszeichnen.

Durch den Verzicht auf ein statisches oder dynamisches Mischelement zur Vermischung der Stoffströme a und b hat das erfindungsgemäße Verfahren den Vorteil, dass auch bei Einsatz von Siliciumverbindungen wie Silanen bzw. Silangemischen mit sehr niedrigen Zündtemperaturen ein stabiler Reaktorstart und ein stabiler Reaktionsverlauf möglich ist.

Des weiteren hat der Verzicht auf ein statisches oder dynamisches Mischelement wirtschaftliche Vorteile, da auf ein Anlagenelement verzichtet werden kann und dieses nicht gewartet wie z.B. gereinigt oder als Einwegprodukt nach einer gewissen Laufzeit ersetzt werden muss, um u.a. die Feststoffbildung und -verschleppung zu begrenzen.

Überraschenderweise wurde außerdem gefunden, dass eine spontane Zündung z.B. durch Diffusion von Sauerstoff zur Kontaktstelle der Stoffströme a und b oder ein Aufwachsen der gebildeten pyrophoren oder extrem entzündlichen Feststoffe bis zum Sauerstoffstrom vermieden werden kann, wenn ein ausreichender Mindestabstand der Kontaktstelle der Stoffströme a und b zum Sauerstoffstrom d eingehalten wird.
Daher beträgt in einer bevorzugten Ausführungsform der Abstand von der Kontaktstelle der Stoffströme a und b zum Sauerstoffstrom d mindestens 0,5 m, besonders bevorzugt mindestens 1,5 m.

Bei einem Anlagenstillstand wird bevorzugt die Verbindung der Sauerstoffquelle zur Konstaktstelle von a und b unterbrochen. In diesem Fall wird die Zufuhr von Stoffstrom c unterbrochen. Es ist insbesondere bevorzugt, dass die Zufuhr von Stoffstrom c mechanisch durch die Installation einer Armatur, insbesondere bevorzugt einer Rückschlagarmatur, unterbrochen wird. In diesem Fall kommt Stoffstrom d weder mit den Stoffströmen a, b oder c, noch mit den gebildeten extrem entzündlichen oder pyrophoren Belägen in Kontakt. Ebenfalls bevorzugt wird ein Inertgas wie z.B. Stickstoff während des Anlagenstillstandes anstelle von Stoffstrom c zugeführt, wobei das Inertgas eine Diffusion von Stoffstrom d zur Kontaktstelle von Stoffstrom a und Stoffstrom b und damit eine potentielle Zündung verhindert.
In einer besonders bevorzugten Ausführungsform der Erfindung zeichnet sich das Verfahren dadurch aus, dass die Verbindung von Stoffstrom d zur Kontaktstelle von a und b durch eine Rückschlagarmatur in der Rohrleitung, in der Stoffstrom c geführt wird, mechanisch unterbrochen und Inertgas zugeführt wird. Diese Armatur ist in den Abbildungen mit AI bezeichnet. Eine Armatur bezeichnet ein zum Verändern oder Absperren von Stoffströmen dienendes Bauelement. Zu den Armaturen zählen Absperrklappen, Ventile, Absperrschieber oder -hähne, Rückschlagklappen oder Rückschlagventile.

Darüber hinaus ist es bevorzugt, dass auch die Zufuhr von Stoffstrom b in Stoffstrom a durch eine Armatur (bezeichnet mit AII) reguliert werden kann.
Ebenso ist es bevorzugt, dass die Zufuhr von Stoffstrom b in Stoffstrom d durch eine Armatur (bezeichnet mit AIII) reguliert werden kann.

Die im Stand der Technik beschriebenen Verfahren können nicht dauerhaft mit Siliciumverbindungen arbeiten, deren Taupunkttemperatur unterhalb der Zündtemperatur liegt. Sie können auch nicht mit Siliciumverbindungen arbeiten, deren Zündtemperatur unterhalb der Temperatur der Sauerstoffquelle liegt. In beiden Fällen würde bei Kontakt mit der Sauerstoffquelle das Gemisch bereits in der im nächstliegenden Stand der Technik beschriebenen Mischkammer und nicht erst in der Reaktionskammer zünden. Ein Produktionsstart und damit eine Produktion von pyrogener Kieselsäure wäre nicht möglich. Selbst wenn, wie in Fig. 2A der WO 2015/003871 gezeigt, eine Vormischung des Brenngas enthaltenden Stoffstroms mit dem die Siliciumverbindung enthaltenden Stoffstrom erfolgt, ist eine stabile Herstellung von Kieselsäure durch die Bildung extrem entzündlicher Beläge in dem beschriebenen Mischelement nicht dauerhaft möglich.

Anschließend wird Stoffstrom c dem Stoffstrom d zugeführt, wobei Stoffstrom d mindestens eine Sauerstoffquelle enthält. Der resultierende Stoffstrom wird mit e bezeichnet. Als Sauerstoffquelle kann beispielsweise Luft, Sauerstoff oder mit Sauerstoff angereicherte Luft eingesetzt werden, besonders bevorzugt handelt es sich bei Stoffstrom d um Luft. Bevorzugt wird Stoffstrom c in einen Luftstrom eingeleitet.

Im Rahmen dieser Erfindung bezeichnet die Mischkammer M den Raum, in dem die Stoffströme a, b und/oder c mit Stoffstrom d zusammengeführt werden. Auch bei der Mischkammer handelt es sich bevorzugt um ein Rohr. Bevorzugt wird Stoffstrom c in Stoffstrom d eingeleitet.
Die Mischkammer enthält bevorzugt mindestens ein Mischelement. Hier kann jedes beliebige, bevorzugt statische, Mischelement (SM) verwendet werden (zur Begriffsbeschreibung und Beispielen gilt das oben Gesagte), es können auch mehrere Mischelemente eingesetzt werden. Besonders bevorzugt wird dieses Mischelement oder Anordnung von mehreren Mischelementen so gewählt, dass eine Kieselsäure mit definierten Qualitätsparametern wie z.B. definierter Oberfläche und Verdickungswirkung erzeugt werden kann.

Beispielsweise ist es wichtig, dass durch das gewählte Mischelement, bzw. die gewählten Mischelemente ein bestimmter Grad der Vermischung, d.h. eine ausreichende Mischgüte erzielt wird. Die Mischgüte ist dem Fachmann als dimensionsloser Variationskoeffient der Konzentrationsverteilung bekannt. Somit können die Eigenschaften der hergestellten Kieselsäure unabhängig vom gewählten Mischelementetyp bzw. der gewählten Mischerkonfiguration wie beispielsweise einer Kombination mehrerer Mischer eingestellt werden. Lediglich die erzielte Mischgüte ist entscheidend.

Sobald Brenngas und Siliciumverbindung mit der Sauerstoffquelle in Kontakt kommen, besteht die Gefahr der Selbstzündung, d.h. eine Zündung ausschließlich aufgrund der Temperatur ohne das Vorhandensein einer Zündquelle wie einen Zündfunken. Eine Zündung vor dem Eintritt in die Reaktorkammer steht jedoch einer stabilen Kieselsäureproduktion entgegen. Um eine solche Zündung zu verhindern, liegt die Temperatur von Stoffstrom d bevorzugt mindestens 5 Kelvin, besonders bevorzugt mindestens 10 Kelvin, unterhalb der Zündtemperatur von Stoffstrom c.

Zudem besteht die Gefahr einer Tröpfchen- oder Nebelbildung durch die Kondensation der Siliciumverbindung. Eine solche Tröpfchenbildung kann zu Flammeninstabilitäten verbunden mit erheblichen Qualitätseinbußen der hergestellten Kieselsäure bis hin zum Ausfall der Verbrennungsreaktion führen. Daher ist es bevorzugt, dass die Temperatur von Stoffstrom d mindestens 5 Kelvin, besonders bevorzugt mindestens 10 Kelvin, über dem Taupunkt von Stoffstrom c liegt.

Durch das Zusammenführen der Stoffströme a und b verbunden mit einer deutlichen Erhöhung der Zündtemperatur ist es wesentlich einfacher, häufig sogar überhaupt erst möglich, Stoffstrom d so zu temperieren, dass seine Temperatur unterhalb der Zündtemperatur aber oberhalb der Taupunkttemperatur von Stoffstrom c liegt.

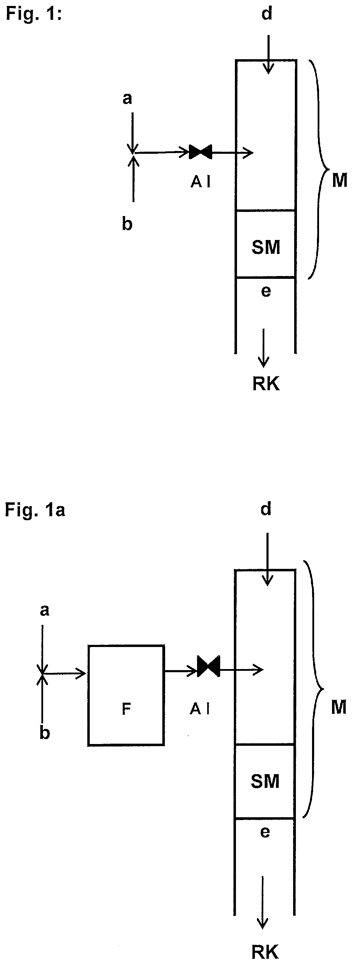

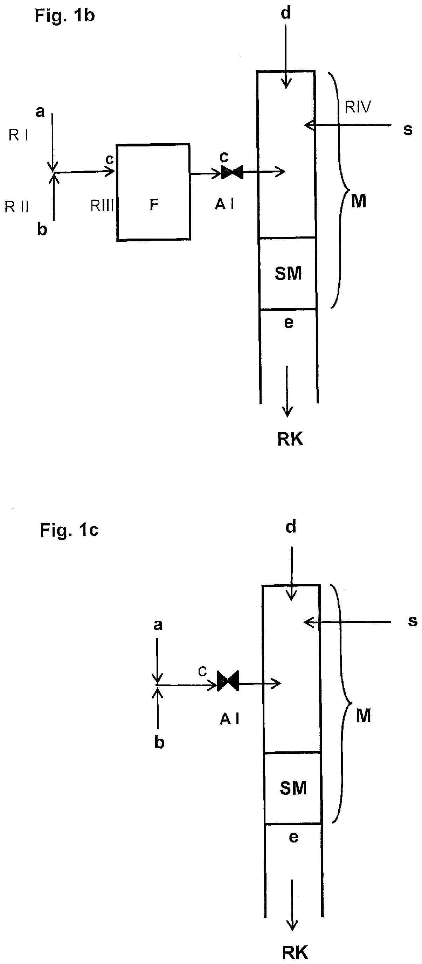

Außerdem ist die getrennte Zuführung weiterer Edukte in Stoffstrom d , wie beispielsweise von weiteren Siliciumverbindungen (z.B. von weiteren Silanen wie Trichlormethylsilan, Methyldichlorsilan) oder weiteren Brenngasen mit vergleichsweise hohen Zündtemperaturen möglich (in den Abb. 1b, 1c, 2b und 2c mit Stoffstrom s bezeichnet).

Der Taupunkt, auch die Taupunkttemperatur, ist diejenige Temperatur, die bei konstantem Druck unterschritten werden muss, damit sich Dampf als Flüssigkeit oder Nebel aus einem Gasgemisch mit kondensierbaren Bestandteilen abscheidet.

Erfindungsgemäß werden die Stoffströme c und d mit einem Mischelement zu einem Stoffstrom e gemischt.

Erfindungsgemäß wird Stoffstrom e anschließend in eine Reaktionskammer mit Brenner eingebracht, dort gezündet und umgesetzt.

Im nächsten Schritt wird der entstandene Feststoff abgetrennt.

Besonders bevorzugt ist die Ausführung des erfindungsgemäßen Verfahrens zum Einsatz von Silanen oder Silananteilen im Gemisch mit sehr niedrigen Zündtemperaturen im gasförmigen Zustand zur Herstellung pyrogener Kieselsäure. Zu diesen Silanen zählen z.B. Dichlor- und Monochlorsilan.

In WO 2015/003873 wird ein Stoffstrom beschrieben (S. 8 Z. 20ff), der als Hauptbestandteile 60-99 Gew.-% SiCl₄ und 0,5-40% HSiCl₃ und als Nebenbestandteile mit einem Anteil von weniger als 5 Gew.-% H₂SiCl₂, SiH₄ und H₃SiCl und HCl enthält, jeweils bezogen auf das Nebenprodukt. Die Begrenzung auf diese Werte resultiert daraus, dass bei der beschriebenen Zusammensetzung die Zündtemperatur des Gemisches noch ausreichenden Abstand zur Taupunkttemperatur besitzt. Die vorliegende Erfindung hat daher gegenüber dem genannten Stand der Technik den großen Vorteil, dass auch höhere Anteile von extrem zündfähigen Silanen wie Dichlor- und Monochlorsilan eingesetzt werden können.

In einer bevorzugten Ausführungsform gilt für das erfindungsgemäße Verfahren folgendes: Stoffstrom a besteht aus Wasserstoff und Erdgas, Stoffstrom b besteht aus einem Silan oder einem Silangemisch, als Stoffstrom d wird Luft verwendet.

Bevorzugt beträgt der Anteil des Brenngases mindestens 1 Gewichtsprozent, besonders bevorzugt mindestens 1,8 bis 30 Gewichtsprozent und insbesondere bevorzugt mindestens 1,9 bis 6,5 Gewichtsprozent, bezogen auf die Gesamtmasse des aus Brenngas und Siliciumverbindung bestehenden Stoffstroms c. Der Anteil des Brenngases in Gewichtsprozent bezieht sich dabei auf seine Masse.

Überraschenderweise wurde gefunden, dass die Verschleppung der zündfähigen Feststoffe fast vollständig reduziert werden kann, wenn das Zusammenführen der Stoffströme a und b direkt vor einem Filter oder in einem Filter erfolgt. In diesem Fall werden die gebildeten Feststoffe im Filter zurückgehalten und gelangen nicht zur Sauerstoffquelle.

Bevorzugt wird Stoffstrom c daher gefiltert. Die Verwendung eines Filters hat den Vorteil, dass entstehender oder bereits enthaltener Feststoff abgetrennt wird. Auf diese Weise wird kein oder wesentlich weniger extrem entzündlicher oder pyrophorer Feststoff zur Sauerstoffquelle verschleppt. Beispielsweise werden die bei der ständigen Vermischung von möglicherweise verunreinigten Siliciumverbindungen, wie z.B. Silanmischungen mit reinen oder verunreinigten wasserstoffhaltigen Brenngasen, entstehenden Feststoffe aus der Mischkammer ferngehalten. Die entstehenden oder enthaltenen Feststoffe werden im Filter abgetrennt und können somit nicht zu Zündungen bei Sauerstoffkontakt und Verschleppung in die Mischkammer oder zu negativen Qualitätseinflüssen durch Feststoffeintrag führen.
Es ist dabei besonders bevorzugt, dass die Stoffströme a und b unmittelbar vor einem Filter in Kontakt gebracht werden (s.o.). In einer bevorzugten Ausführungsform des Verfahrens werden die Stoffströme a und b in einem Filter in Kontakt gebracht. Der Ausdruck "in einem Filter" bedeutet, dass der Filter mit zwei separaten Eintritten für die Stoffströme a und b ausgestattet ist.

Als Filter wird bevorzugt ein Siebkorbfilter mit einer Maschenweite von <100 µm, besonders bevorzugt von <80 µm eingesetzt.

Wenn die erfindungsgemäße Mischung von Stoffstrom a und b zu Stoffstrom c lediglich aufgrund der Fraktionierung im Silanverdampfer beim Reaktionsstart erfolgt, ist das Vormischen der Stoffströme a und b nur zum Start des Brenners und in dessen Einfahrphase notwendig. Sobald die Verdampfung des Silans derart erfolgt, dass durch die Fraktionierung kein Gasgemisch aus Siliciumverbindungen mit niedrigen Zündtemperaturen entsteht, entfällt die Notwendigkeit des Vormischens. Es ist daher bevorzugt, dass das erfindungsgemäße Verfahren höchstens eine Stunde, besonders bevorzugt höchstens 15 min und insbesondere bevorzugt höchsten 5 min durchgeführt wird und die Stoffströme a und b anschließend getrennt und in beliebiger Reihenfolge vor einem Mischelement (SM) mit Stoffstrom d in Kontakt gebracht werden.

Diese besondere Ausgestaltung der Erfindung ist beispielhaft in Fig. 2a dargestellt. Während des Anfahrbetriebes ist Armatur II geöffnet und Armatur III geschlossen. Während des Dauerbetriebes ist Armatur II geschlossen und Armatur III geöffnet. Armatur I ist nur im Anlagenstillstand geschlossen. Diese Ausgestaltung der Erfindung hat den Vorteil, dass die Möglichkeit des Aufwachsens von extrem entzündlichen oder pyrophoren Belägen durch die Minimierung der Kontaktzeit zwischen Wasserstoff und der Siliciumverbindung, enthaltend die herstellungsbedingten Verunreinigungen, auf ein Minimum reduziert wird und dadurch die Stabilität der Reaktion auf ein Maximum verlängert wird.

Weiterhin beschrieben ist eine Vorrichtung zum Ausführen des oben beschriebenen erfindungsgemäßen Verfahrens, dadurch gekennzeichnet, dass eine Rohrleitung RI enthaltend Stoffstrom a, der mindestens ein Brenngas enthält und eine Rohrleitung RII enthaltend Stoffstrom b, der mindestens ein Silan ausgewählt aus der Gruppe bestehend aus Dichlorsilan (H₂SiCl₂), Monochlorsilan (H₃SiCl) oder Monosilan (SiH₄) oder deren Gemische enthält, in eine Rohrleitung RIII eingeleitet werden, wobei RIII eine Armatur AI und kein statisches Mischelement enthält, die Rohrleitung RIII in eine Mischkammer, enthaltend Stoffstrom d, der mindestens eine Sauerstoffquelle enthält, eingeleitet wird, wobei die Mischkammer aus einer Rohrleitung, die in mindestens ein statisches Mischelement mündet, aufgebaut ist, das Gemisch aus der Misch- in die Reaktionskammer geführt, dort gezündet und umgesetzt wird und der entstandene Feststoff abgetrennt wird.

Für die Stoffströme, Armaturen und Filter gelten die oben genannten Definitionen und Beispiele.

Die Armatur AI zeichnet sich dadurch aus, dass sie in offenem Zustand die Stoffströme a, b und/oder c in die Mischkammer einleitet. Wird die Armatur AI geschlossen, ist die Verbindung zur Kontaktstelle von Stoffstrom a und b unterbrochen und damit Rohrleitung RIII geschlossen.

Es ist bevorzugt, dass AI als Rückschlagklappe ausgeführt ist.

Es ist bevorzugt, dass Rohrleitung RIII einen Filter enthält.

Es ist weiterhin bevorzugt, dass RI und RII durch eine Armatur AII getrennt werden können. AII zeichnet sich dadurch aus, dass sie in offenem Zustand Stoffstrom b in RIII einleitet, in das auch RI eingeleitet wird und so die Bildung von Stoffstrom c bewirkt. Ist AII geschlossen, erfolgt keine Zufuhr von RII, die Stoffstrom b führt, in RI, die Stoffstrom a führt.

Es ist außerdem bevorzugt, dass RII eine Armatur AIII enthält. Ist AII geschlossen und AI und AIII geöffnet, fließen die Stoffströme a und b getrennt in die Mischkammer M.

Darüber hinaus ist es bevorzugt, dass in die Mischkammer eine Rohrleitung RIV, enthaltend einen Stoffstrom s, enthaltend ein Silan oder Silangemisch mit hoher Zündtemperatur oder SiCl₄, eingeleitet wird.

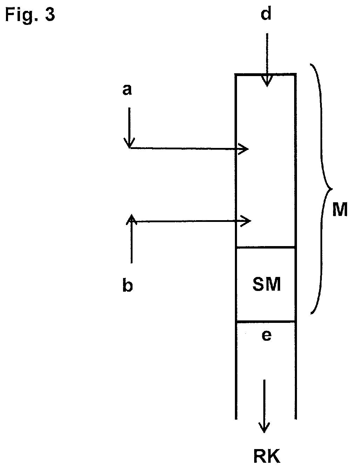

Die Figuren 1, 1a, 1b, 1c, 2, 2a, 2b und 2c zeigen mögliche Ausführungsformen Figur 3 zeigt ein Vergleichsbeispiel.
- M: bezeichnet die Mischkammer
- SM: bezeichnet mindestens ein statisches Mischelement.
- a: bezeichnet den das Brenngas enthaltenden Stoffstrom a.
- b: bezeichnet den mindestens ein Silan, ausgewählt aus der Gruppe bestehend aus Dichlorsilan (H₂SiCl₂), Monochlorsilan (H₃SiCl) oder Monosilan (SiH₄) oder deren Gemische, enthaltenden Stoffstrom b.
- R: bezeichnet eine Rohrleitung.
- RI: bezeichnet die Rohrleitung, in der Stoffstrom a geführt wird.
- RII: bezeichnet die Rohrleitung, in der Stoffstrom b geführt wird.
- RIII: bezeichnet die Rohrleitung, in die die Stoffströme a und b eingeleitet werden und in der Stoffstrom c geführt wird.
- RIV: bezeichnet die Rohrleitung, in der Stoffstrom s geführt wird.
- AI, AII und AIII: bezeichnen Armaturen.
- F: bezeichnet einen Filter.
- RK: bezeichnet die Reaktionskammer.

Die Erfindung wird im Folgenden anhand von Ausführungsbeispielen näher beschrieben, ohne dadurch beschränkt zu werden.

### Beispiele

### Beispiel 1: Vergleichsbeispiel (nicht erfindungsgemäß)

Stoffstrom b ist ein aus großtechnischer Herstellung stammendes Silangemisch mit einer Zusammensetzung aus
63,7 Vol% Siliciumtetrachlorid,
8,0 Vol% Trichlorsilan,
28,1 Vol% Dichlorsilan und
0,2 Vol% Monochlorsilan.
Das Silangemisch kann herstellungsbedingt in geringen Mengen Verunreinigungen (z.B. Borchlorid, Aluminiumchlorid, bzw. Kohlenwasserstoffe, oder weitere Silane (bis 0,1 Vol%) enthalten. Das Silangemisch wird im Silanverdampfer in einen gasförmigen Zustand umgewandelt und mit einer Temperatur von 105°C über einen Rohranschluss, wie in Fig. 3 dargestellt, aber ohne dass eine Vormischung mit einem Stoffstrom a erfolgt, in einer Mischkammer in einen Luftstrom (Stoffstrom d) mit einer Temperatur von 105°C eingeleitet. Ein Stoffstrom a, bestehend aus Erdgas und Wasserstoff, wird separat über einen weiteren Rohranschluss mit einer Temperatur von 105°C in die Mischkammer M eingeleitet. Das Silangemisch zündet bereits in der Mischkammer M, wodurch die Sicherheitseinrichtungen die Zufuhr der Einsatzstoffe unterbrechen. Die Herstellung von pyrogener Kieselsäure ist nicht möglich.
Als Mischkammer wird ein gerades Rohr eingesetzt. Als statisches Mischelement kommt ein handelsüblicher statischer Mischer M vom Typ Compax™ der Fa. Sulzer zum Einsatz.

Bezogen auf die Gesamtmasse von Brenngas und Silan beträgt der Anteil Silan 93,2% und Brenngas 6,8%.
Das Verhältnis Wasserstoff zu Erdgas ist bezogen auf deren Masse 1:1. Der Volumenstrom von Stoffstrom d (Luft) ist in Bezug auf Sauerstoff mindestens stöchiometrisch gewählt. Der Gesamtvolumenstrom (Stoffstrom e) und die Auslaufstrecke aus dem Mischer sind so gewählt, dass beides im vom Hersteller des Mischers empfohlenen, optimalen Betriebsbereich des statischen Mischers liegt.

### Beispiel 2:

Stoffstrom b ist ein aus großtechnischer Herstellung stammendes Silangemisch mit einer Zusammensetzung aus
63,7 Vol% Siliciumtetrachlorid,
8,0 Vol% Trichlorsilan,
28,1 Vol% Dichlorsilan und
0,2 Vol% Monochlorsilan.
Das Silangemisch kann herstellungsbedingt in geringen Mengen Verunreinigungen (z.B. Borchlorid, Aluminiumchlorid, bzw. Kohlenwasserstoffe, oder weitere Silane (bis 0,1 Vol%) enthalten. Das Silangemisch wird im Silanverdampfer in einen gasförmigen Zustand umgewandelt und mit einer Temperatur von 105°C über einen Rohranschluss, wie in Fig. 1 dargestellt, mit einem auf 105°C aufgeheizten Stoffstrom a, bestehend aus Erdgas und Wasserstoff, vor einem Siebkorbfilter in Kontakt gebracht, so dass 93,2 Gewichtsanteile Silan und 6,8 Gewichtsanteile Brenngas erreicht werden (Stoffstrom c). Das Verhältnis Wasserstoff zu Erdgas ist bezogen auf deren Masse 1:1. Das Gemisch aus dem Siebkorbfilter wird mit einer Temperatur von 105°C in eine Mischkammer, enthaltend einen Luftstrom (Stoffstrom d) von 105°C eingeleitet und in dieser mit einem statischen Mischelement SM zu Stoffstrom e vermischt. Das Brenngas-Silangemisch zündet nicht bei Kontakt mit der Sauerstoffquelle aus Stoffstrom c bereits in der Mischkammer M, sondern wie vorgesehen in der Reaktionskammer. Die Herstellung von pyrogener Kieselsäure ist möglich.
Als Mischkammer wird ein gerades Rohr eingesetzt.
Als statisches Mischelement M kommt ein handelsüblicher statischer Mischer vom Typ Compax™ der Fa. Sulzer zum Einsatz.
Der Abstand zwischen der als T-Stück gemäß DIN 10253-4 Bild 4 ausgeführten Kontaktstelle und dem runden Gaseintritts des

Siebkorbfilters mit gleichem Nenndurchmesser beträgt das Zweieinhalbfache des Nenndurchmessers des T-Stücks. Der Durchmesser des T-Stücks ist so gewählt, dass sich eine Gasgeschwindigkeit von 12 m/s ergibt.
Der Volumenstrom von Stoffstrom d (Luft) ist in Bezug auf Sauerstoff mindestens stöchiometrisch gewählt. Der Gesamtvolumenstrom (Stoffstrom e) und die Auslaufstrecke aus dem Mischer sind so gewählt, dass beides im vom Hersteller des Mischers empfohlenen, optimalen Betriebsbereich des statischen Mischers liegt.

### Beispiel 3 (erfindungsgemäß):

Stoffstrom b ist ein aus großtechnischer Herstellung stammendes Silangemisch mit einer Zusammensetzung aus
63,7 Vol% Siliciumtetrachlorid,
8,0 Vol% Trichlorsilan,
28,1 Vol% Dichlorsilan und
0,2 Vol% Monochlorsilan.
Das Silangemisch kann herstellungsbedingt in geringen Mengen Verunreinigungen (z.B. Borchlorid, Aluminiumchlorid, bzw. Kohlenwasserstoffe, oder weitere Silane (bis 0,1 Vol%) enthalten. Das Silangemisch wird im Silanverdampfer in einen gasförmigen Zustand umgewandelt und mit einer Temperatur von 105°C über einen Rohranschluss, wie in Fig. 1 dargestellt, mit einem auf 105°C aufgeheizten Stoffstrom a, bestehend aus Erdgas und Wasserstoff, in einem Siebkorbfilter in Kontakt gebracht, so dass 93,2 Gewichtsanteile Silan und 6,8 Gewichtsanteile Brenngas erreicht werden (Stoffstrom c). Das Verhältnis Wasserstoff zu Erdgas ist bezogen auf deren Masse 1:1. Der Siebkorbfilter ist mit 2 separaten Eintritten für Stoffstrom a und Stoffstrom b ausgestattet. Das Gemisch c aus dem Siebkorbfilter wird mit einer Temperatur von 105°C in eine Mischkammer, enthaltend einen Luftstrom (Stoffstrom d) von 105°C eingeleitet und anschließend in einem statischen Mischer zu Stoffstrom e vermischt. Das Brenngas-/ Silangemisch zündet nicht bei Kontakt mit der Sauerstoffquelle aus Stoffstrom c in der Mischkammer, sondern wie vorgesehen in der Reaktionskammer. Die Herstellung von pyrogener Kieselsäure ist möglich.
Als Mischkammer wird ein gerades Rohr eingesetzt.
Als statisches Mischelement M kommt ein handelsüblicher statischer Mischer vom Typ Compax™ der Fa. Sulzer zum Einsatz.
Der Volumenstrom von Stoffstrom d (Luft) ist in Bezug auf Sauerstoff mindestens stöchiometrisch gewählt. Der Gesamtvolumenstrom (Stoffstrom e) und die Auslaufstrecke aus dem Mischer sind so gewählt, dass beides im vom Hersteller des Mischers empfohlenen, optimalen Betriebsbereich des statischen Mischers liegt.

## Patentansprüche

1. Verfahren zur Herstellung von pyrogener Kieselsäure, bei dem
i) ein Stoffstrom a, enthaltend mindestens ein Brenngas,
ii) mit einem Stoffstrom b, enthaltend mindestens ein Silan ausgewählt aus der Gruppe bestehend aus Dichlorsilan (H₂SiCl₂), Monochlorsilan (H₃SiCl) oder Monosilan (SiH₄) oder deren Gemische,
zu einem Stoffstrom c zusammengeführt wird, ohne dass ein statisches oder dynamisches Mischelement verwendet wird,
iii) und in dem Stoffstrom c einem Stoffstrom d, enthaltend mindestens eine Sauerstoffquelle, zugeführt wird,
iv) die Stoffströme c und d mit einem Mischelement zu einem Stoffstrom e gemischt werden,
v) Stoffstrom e in eine Reaktionskammer eingebracht und dort gezündet und umgesetzt wird und
vi) der entstandene Feststoff abgetrennt wird.

2. Verfahren nach Anspruch 1, **dadurch gekennzeichnet, dass** Stoffstrom b eine weitere Siliciumverbindung ausgewählt aus der Gruppe bestehend aus Tetrachlorsilan (SiCl₄), Trichlorsilan (HSiCl₃), Trichlormethylsilan (CH₃SiCl₃) oder Dichlormethylsilan (CH₄Cl₂Si) oder deren Gemische enthält.

3. Verfahren nach einem oder mehreren der Ansprüche 1 oder 2, **dadurch gekennzeichnet, dass** es sich beim Brenngas um Erdgas, Wasserstoff oder ein Gemisch aus Erdgas und Wasserstoff handelt.

4. Verfahren nach einem oder mehreren der Ansprüche 1 bis 3, **dadurch gekennzeichnet, dass** es sich beim Brenngas um Wasserstoff handelt.

5. Verfahren nach einem oder mehreren der Ansprüche 1 bis 4, **dadurch gekennzeichnet, dass** es sich bei Stoffstrom d um Luft handelt.

6. Verfahren nach einem oder mehreren der Ansprüche 1 bis 5, **dadurch gekennzeichnet, dass** der Anteil des Brenngases mindestens 1 Gewichtsprozent bezogen auf die Gesamtmasse des Gemisches aus Brenngas und Siliciumverbindung beträgt.

7. Verfahren nach einem oder mehreren der Ansprüche 1 bis 6, **dadurch gekennzeichnet, dass** Stoffstrom c gefiltert wird.

8. Verfahren nach einem oder mehreren der Ansprüche 1 bis 7, **dadurch gekennzeichnet, dass** die Stoffströme a und b in einem Filter in Kontakt gebracht werden.

9. Verfahren nach einem oder mehreren der Ansprüche 1 bis 8, **dadurch gekennzeichnet, dass** die Zuführung von Stoffstrom c unterbrochen werden kann.

10. Verfahren nach einem oder mehreren der Ansprüche 1 bis 9, **dadurch gekennzeichnet, dass** es höchstens eine Stunde durchgeführt wird und die Stoffströme a und b anschließend getrennt und in beliebiger Reihenfolge vor einem Mischelement mit Stoffstrom d in Kontakt gebracht werden.

## Claims

1. Process for producing fumed silica, in which
i) a stream of matter a, comprising at least one fuel gas,
is combined
ii) with a stream of matter b, comprising at least one silane selected from the group consisting of dichlorosilane (H₂SiCl₂), monochlorosilane (H₃SiCl) or monosilane (SiH₄) or mixtures thereof,
to give a stream of matter c, without using a static or dynamic mixing element,
iii) and in which stream of matter c is supplied to a stream of matter d, comprising at least one oxygen source,
iv) streams of matter c and d are mixed with a mixing element to give a stream of matter e,
v) stream of matter e is introduced into a reaction chamber, where it is ignited and converted, and
vi) the resultant solids are removed.

2. Process according to Claim 1, **characterized in that** stream of matter b comprises a further silicon compound selected from the group consisting of tetrachlorosilane (SiCl₄), trichlorosilane (HSiCl₃), trichloromethylsilane (CH₃SiCl₃) or dichloromethylsilane (CH₄Cl₂Si) or mixtures thereof.

3. Process according to one or more of Claims 1 or 2, **characterized in that** the fuel gas is natural gas, hydrogen or a mixture of natural gas and hydrogen.

4. Process according to one or more of Claims 1 to 3, **characterized in that** the fuel gas is hydrogen.

5. Process according to one or more of Claims 1 to 4, **characterized in that** stream of matter d is air.

6. Process according to one or more of Claims 1 to 5, **characterized in that** the proportion of the fuel gas is at least 1 percent by weight based on the total mass of the mixture of fuel gas and silicon compound.

7. Process according to one or more of Claims 1 to 6, **characterized in that** stream of matter c is filtered.

8. Process according to one or more of Claims 1 to 7, **characterized in that** streams of matter a and b are contacted in a filter.

9. Process according to one or more of Claims 1 to 8, **characterized in that** the supply of stream of matter c can be interrupted.

10. Process according to one or more of Claims 1 to 9, **characterized in that** it is conducted for one hour at most and streams of matter a and b are subsequently separated and contacted with stream of matter d upstream of a mixing element in any sequence.

## Revendications

1. Procédé de production de silice pyrogénée, dans lequel
i) un flux de matière a, contenant au moins un gaz combustible, est uni à
ii) un flux de matière b, contenant au moins un silane choisi dans le groupe comprenant le dichlorosilane (H₂SiCl₂), le monochlorosilane (H₃SiCl) et le monosilane (SiH₄) ou leurs mélanges,
pour former un flux de matière c sans utiliser d'élément de mélange statique ou dynamique,
iii) et dans lequel le flux de matière c est amené à un flux de matière d contenant au moins une source d'oxygène,
iv) les flux de matière c et d sont mélangés à un élément de mélange pour former un flux de matière e,
v) le flux de matière e est introduit dans une chambre de réaction où il est enflammé et converti et
vi) la matière solide formée est séparée.

2. Procédé selon la revendication 1, **caractérisé en ce que** le flux de matière b contient un autre composé du silicium choisi dans le groupe comprenant le tétrachlorosilane (SiCl₄), le trichlorosilane (HSiCl₃), le trichlorométhylsilane (CH₃SiCl₃) et le dichlorométhylsilane (CH₄Cl₂Si) ou leurs mélanges.

3. Procédé selon une ou plusieurs des revendications 1 et 2, **caractérisé en ce que** le gaz combustible est du gaz naturel, de l'hydrogène ou un mélange de gaz naturel et d'hydrogène.

4. Procédé selon une ou plusieurs des revendications 1 à 3, **caractérisé en ce que** le gaz combustible est l'hydrogène.

5. Procédé selon une ou plusieurs des revendications 1 à 4, **caractérisé en ce que** le flux de matière d est de l'air.

6. Procédé selon une ou plusieurs des revendications 1 à 5, **caractérisé en ce que** la proportion de gaz combustible est d'au moins 1 pour cent en poids par rapport à la masse totale du mélange de gaz combustible et de composé de silicium.

7. Procédé selon une ou plusieurs des revendications 1 à 6, **caractérisé en ce que** le flux de matière c est filtré.

8. Procédé selon une ou plusieurs des revendications 1 à 7, **caractérisé en ce que** les flux de matière a et b sont mis en contact dans un filtre.

9. Procédé selon une ou plusieurs des revendications 1 à 8, **caractérisé en ce que** l'amenée de flux de matière c peut être interrompue.

10. Procédé selon une ou plusieurs des revendications 1 à 9, **caractérisé en ce qu'**il est mis en œuvre pendant une heure maximum et les flux de matière a et b sont ensuite séparés et mis en contact avec le flux de matière d dans un ordre quelconque en amont d'un élément de mélange.
